(19) **Europäisches Patentamt**

**European Patent Office**

**Office européen des brevets**

(11) **EP 1 085 387 B1**

(12) **EUROPÄISCHE PATENTSCHRIFT**

(45) Veröffentlichungstag und Bekanntmachung des Hinweises auf die Patenterteilung:
   **26.11.2003 Patentblatt 2003/48**

(51) Int Cl.⁷: $G05B\ 19/042$, $G06F\ 9/00$, $G06F\ 12/06$

(21) Anmeldenummer: **00120570.7**

(22) Anmeldetag: **20.09.2000**

(54) **Speichersteuerung zum Durchführen von Schaltbefehlen für den Zugriff auf Speicherzellen**

Memory controller for performing switching to access storage cells

Contrôleur de mémoire pour éffectuer une commutation d'accès aux céllules de mémoire

(84) Benannte Vertragsstaaten:
   **DE FR GB IT NL**

(30) Priorität: **20.09.1999 DE 19945004**

(43) Veröffentlichungstag der Anmeldung:
   **21.03.2001 Patentblatt 2001/12**

(73) Patentinhaber: **Micronas GmbH**
   **79108 Freiburg (DE)**

(72) Erfinder: **Umbach, Gert, Dr. Ing.**
   **79104 Freiburg (DE)**

(74) Vertreter: **Schaumburg, Thoenes & Thurn**
   **Postfach 86 07 48**
   **81634 München (DE)**

(56) Entgegenhaltungen:
   **EP-A- 0 619 546**      **US-A- 4 172 281**
   **US-A- 5 307 320**

**Beschreibung**

Die Erfindung betrifft eine Speichersteuerung zum Durchführen von Schaltbefehlen für den Zugriff auf Speicherzellen zum Schreiben und zum Lesen von Daten, die den Daten beigegebene Steuerbefehle erhält, für mindestens einen Speichertyp einen Befehlssatz mit Befehlssequenzen aus einzelnen, in einer vorbestimmten Reihenfolge abzuarbeitenden Schaltbefehlen enthält, die durch die Steuerbefehle aktiviert werden, die Schaltbefehle einer dem aktuellen Steuerbefehl entsprechenden Befehlssequenz aufeinanderfolgend aktiviert, und den aktuellen Schaltbefehl um eine vorbestimmte Zeit nach dem vorhergehenden Schaltbefehl aktiviert.

Eine solche Speichersteuerung läßt sich überall dort anwenden, wo zwecks elektronischer Datenverarbeitung Daten in digitaler Form in den Speicherzellen eines Speichers gespeichert werden. Das ist z.B. bei Computern der Fall. Zunehmend werden solche Speichersteuerungen auch bei Fernsehendgeräten verwendet. Die immer komplexer werdenden Steuervorgänge von elektronischen Geräten werden vielfach mit Hilfe von sogenannten Mikrocontrollern durchgeführt, die dann ebenfalls

eine Speichersteuerung benötigen. Als Beispiel sind hier Steuervorrichtungen eines Armaturenbrettes für Kraftfahrzeuge oder auch in jüngster Zeit aufkommende Navigationssysteme zu nennen.

Zum Schreib- und zum Lesezugriff auf Speicherzellen werden den Daten, die in die Speicherzellen geschrieben oder aus diesen gelesen werden sollen, Steuerbefehle beigegeben, die z.B. Informationen über die Speicheradresse und darüber enthalten, ob geschrieben oder gelesen werden soll. Bei den aktuellen Speichern, wie z. B. SGRAM, SDRAM, MDRAM, PBSRAM usw., sind die Steuerbefehle für das Schreiben und das Lesen aus einzelnen Befehlen zusammengesetzte Sequenzen. Dabei unterscheiden sich technisch bedingt für die einzelnen Speichertypen die Schaltbefehle, die diesen Steuerbefehlen jeweils entsprechen. Eine Speichersteuerung ist deshalb im allgemeinen einem speziellen Speichertyp zugehörig und enthält den spezifischen Befehlssatz für diesen Typ. Entsprechend den Steuerbefehlen wird von der Speichersteuerung für jeden Befehl einer Befehlssequenz der entsprechende Schaltbefehl aus dem Befehlssatz ausgewählt und aktiviert. Dabei ist die Auswahl des jeweiligen Schaltbefehls abhängig von dem jeweiligen Steuerbefehl und dem vorhergehenden Schaltbefehl.

Für das Durchführen des jeweiligen Schaltbefehls wird eine bestimmte Zeit benötigt. Diese bestimmte Zeit hängt von dem Schaltbefehl selbst und von dem Speichertyp ab. Bei einigen Speichertypen kann die bestimmte Zeit auch noch von dem vorherigen Schaltbefehl abhängen. Zum Teil kann auch im sogenannten burst-Modus parallel auf die Speicherzellen einiger Speichertypen zugegriffen werden. Damit diese Möglichkeiten im Hinblick auf eine schnellere Verarbeitungsgeschwindigkeit sinnvoll genutzt werden können, muß die Speichersteuerung diese Zugriffe entsprechend überlappend durchführen.

Wenn man unterschiedliche Speichertypen bei einem Daten-/Signalverarbeitungssystem verwenden möchte, muß man derzeit die dem jeweiligen Speichertyp zugehörige Speichersteuerung verwenden, um die jeweiligen, spezifischen Möglichkeiten dieses Speichertyps effizient nutzen zu können. Es ist ferner damit zu rechnen, daß zukünftig weitere Speichertypen mit zusätzlichen Zugriffsmöglichkeiten auf den Markt kommen, die dann ebenfalls einer eigenen, spezifischen Speichersteuerung bedürfen.

Um eine Speichersteuerung flexibler einsetzen zu können bzw. um bei einer bestehenden Schaltung nicht auf einen Speichertyp angewiesen zu sein, ist es deshalb wünschenswert, verschiedene Speichertypen mit ein und derselben Speichersteuerung ansteuern zu können. Eine jüngst auf den Mark gebrachte Speichersteuerung SH7708 der Firma Hitachi ermöglicht das Verwenden von DRAM, SDRAM und PSRAM. Allerdings werden bei dieser bekannten Speichersteuerung die spezifischen Vorteile und Möglichkeiten der einzelnen Speichertypen nur unzureichend genutzt. Z. B. wird der Zugriff auf SDRAM-Speicher nicht parallel im sogenannten burst-Modus durchgeführt. Dies führt zu Geschwindigkeitsverlusten.

Als weiterer Stand der Tecknik wird die Druckschrift US 4,172,281 genannt.

Es ist Aufgabe der Erfindung, eine Speichersteuerung zum Steuern des Zugriffs auf Speicherzellen zum Schreiben und zum Lesen von Daten anzugeben, die schnell und einfach auf die spezifischen Möglichkeiten eines bestimmten Speichertyps umgestellt werden kann und die dabei die spezifischen Möglichkeiten des jeweiligen Speichertyps effizient nutzt.

Die Aufgabe wird bei einer Speichersteuerung der eingangs genannten Art dadurch gelöst, daß abhängig von dem vorhergehenden Schaltbefehl und dem aktuellen Steuerbefehl der aktuelle Schaltbefehl aktiviert wird, und daß der Speichersteuerung den Speicherzellen zugeordnete Informationen zuführbar sind, die die genannte vorbestimmte Zeit angeben.

Auf diese Weise lassen sich dem jeweiligen Schaltbefehl verschiedene vorbestimmte Zeiten abhängig davon zuordnen, welcher Schaltbefehl vorhergehend ausgeführt worden ist. Somit läßt sich erreichen, daß für jeden Schaltbefehl nur die kürzeste benötigte Zeit verwendet werden muß. Es läßt sich auf diese Weise geänderten Leistungsmerkmalen eines Speichertyps einfach dadurch Rechnung tragen, daß ein anderer Befehlssatz und andere vorbestimmte Zeiten verwendet werden. Auf diese Weise ist die Speichersteuerung nach der Erfindung einfach und flexibel einsetzbar.

Bei einer Weiterbildung der Erfindung ist für jeden Schaltbefehl ein Sollwert in einem Register gespeichert. Der Sollwert kann dabei der vorbestimmten Zeit entsprechen und das Register kann ein Schreib/Lesespeicher sein. Auf diese Weise läßt sich bei Verwenden verschiedener Speichertypen die vorbestimmte Zeit für den jeweiligen Schaltbefehl besonders einfach ändern.

Wenn ein Zähler bei einer Weiterbildung die Impulse einer Impulsfolge seit dem Aktivieren des Schaltbefehls zählt, läßt sich auf diese Weise besonders einfach die vorbestimmte Zeit für den jeweiligen Schaltbefehl messen.

In diesem Fall ist es von Vorteil, wenn der Zählerstand mit dem Sollwert verglichen wird, und wenn ein Signal erzeugt wird, wenn der Zählerstand gleich dem Sollwert ist. Ein Vergleich des Zählerstands mit dem Sollwert läßt sich technisch einfach realisieren und das Signal läßt sich einfach zum Aktivieren des nachfolgenden Schaltbefehls verwenden. Vorzugsweise wird dann das Signal erfaßt und beim Erfassen des Signals der nächste Schaltbefehl aktiviert.

Bei einer Weiterbildung wird mindestens ein Schaltbefehl bereits vor dem Erfassen des Signals aktiviert. Auf diese Weise lassen sich Schaltbefehle berücksichtigen, deren Durchführen nur eine verhältnismäßig kurze Zeit in Anspruch nimmt. Es muß hierbei kein zusätzlicher Wert für eine vorbestimmte Zeit an irgendeiner Stelle gespeichert werden.

Bei einer Weiterbildung der Erfindung werden die Sollwerte für die Schaltbefehle in einem Einrichtvorgang in das Register geschrieben. Vor dem eigentlichen Einbau der Speicherung kann auf diese Weise durch Schreiben der Sollwerte in das Register die Speichersteuerung schnell und einfach auf die spezifische Möglichkeiten eines bestimmten Speichertyps umgestellt werden.

Bei einer Weiterbildung der Erfindung enthält das Register auch einen Wert für die Zeit, nach der der Speicherinhalt aufgefrischt werden soll. Bei den üblicherweise heute verwendeten dynamischen Speichern ist ein Wiederauffrischen des Speicherinhalts nach einer gewissen Zeit notwendig. Auf die vorstehend beschriebene Weise lassen sich die bisher beschriebenen Elemente auch gleich zum Bereitstellen der Zeit für das Wiederauffrischen verwenden.

Bei einer anderen Weiterbildung der Erfindung ist eine Einrichtung vorgesehen, die ein Signal erzeugt, wenn der aktuelle Steuerbefehl zu einer neuen Befehlssequenz gehört. Dieses Signal läßt sich vorteilhaft zum Steuern des Ablaufs verwenden.

Bei einer Weiterbildung der Erfindung werden von der Speichersteuerung Ablaufsteuerbefehle für das Abarbeiten der einzelnen Schaltbefehle der Befehlssequenz in der vorbestimmten Reihenfolge erzeugt. Diese Maßnahme gibt der Speichersteuerung auf einfache Weise die Möglichkeit, die einzelnen Schaltbefehle einer Befehlssequenz an Hand der Ablaufsteuerbefehle zuzuordnen.

Bei einer Weiterbildung der Erfindung sind die Aktivierbefehle in einem zweiten Register gespeichert. Die Aktivierbefehle selbst sind verhältnismäßig unabhängig von dem verwendeten Speichertyp und können deshalb für verschiedene Speichertypen verwendet werden. Zum Anpassen der Speichersteuerung an die Leistungsmerkmale eines anderen Speichertyps ist in diesem Fall lediglich das Anpassen der vorbestimmten für den jeweiligen Schaltbefehl durchzuführen, wobei die vorbestimmte Zeit in dem ersten Register gespeichert sein kann.

Vorzugsweise sind die Schaltbefehle in einem dritten Register gespeichert. Auf diese Weise kann der Inhalt des gerade anzupassenden Registers überschrieben werden.

Wenn bei dieser Weiterbildung das dritte Register ein Schreib/Lesespeicher oder ein programmierbarer Festwertspeicher ist, in den die Schaltbefehle in einem Initialisiervorgang geschrieben werden, läßt sich die Speichersteuerung durch einfaches Einschreiben der Schaltbefehle in das dritte Register vor dem Einbau der Speichersteuerung an die spezifischen Leistungsmerkmale des verwendeten Speichertyps anpassen.

Eine Weiterbildung der Erfindung zeichnet sich dadurch aus, daß ein Signal erzeugt wird, wenn die aktuelle Befehlssequenz Speicherzellen derselben Zeile des Speichers betrifft wie die vorhergehende Befehlssequenz. Wenn die Speicherzellen des verwendeten Speichertyps im sogenannten burst-Modus verwendet werden können, läßt sich dieses Signal dazu benutzen, die Speicherzellen dementsprechend anzusteuern.

Der Befehlssatz für den jeweiligen Speichertyp kann auch an Hand der den Speicherzellen zugeordneten Informationen bestimmt werden. Das ist besonders dann vorteilhaft, wenn die Speichersteuerung Befehlssätze für mehrere verschiedene Speichertypen enthält. In diesem Fall verwendet die Speichersteuerung dann den für den jeweiligen Speichertyp jeweils passenden Befehlssatz.

Bei einer Weiterbildung der Erfindung wird ein Signal erzeugt, wenn das Schreiben oder Lesen beendet ist. Dieses Signal läßt sich vorteilhaft zum Steuern des Ablaufs verwenden.

Vorzugsweise wird das Signal zusammmen mit der Herkunftsadresse für den Zugriff nach dem Beenden zurückgegeben. Z.B. kann dann mit dem Signal dem betreffenden Prozessor, der den Zugriff veranlaßt hat, zurückgemeldet werden, daß der Zugriff beendet worden ist.

In diesem Fall kann ein Signal erzeugt werden, wenn der aktuelle Schaltbefehl der erste Schaltbefehl einer neuen Befehlssequenz ist. Dieses Signal läßt sich z.B. vorteilhaft zum Messen der Zeit verwenden, die nach dem Beginn einer Befehlssequenz vergangen ist.

Wenn dann die den Speicherzellen zugeordneten Informationen auch die Zeit angeben, nach der nach dem Aktivieren des ersten Schaltbefehls der jeweiligen neuen Befehlssequenz das Schreiben oder das Lesen jeweils beendet ist, kann um die Zeit nach dem Erfassen des Signals das Signal erzeugt werden.

Im folgenden wird ein Ausführungsbeispiel der Erfindung an Hand der Zeichnung näher erläutert. Es zeigen:

Fig. 1      eine bekannte Speichersteuerung,

Fig. 2      eine schematische Darstellung einer Speichersteuerung als Ausführungsbeispiel,

Fig. 3      ein Blockschaltbild der Speichersteuerung nach Fig. 2 in einer schematischen Ansicht, und

Fig. 4      ein Blockschaltbild des Moduls zum Erzeugen eines Aktivierbefehls von Fig. 3,

Fig. 5      ein Blockdiagramm des Ablaufs eines Verfahrens zum Durchführen des Zugriffs auf Speicherzellen nach der Erfindung, und

Fig. 6      ein Blockdiagramm der im Schritt S26 in Fig. 5 zusammengefaßten Verfahrensschritte zum Erzeugen des Signals DATAVALID.

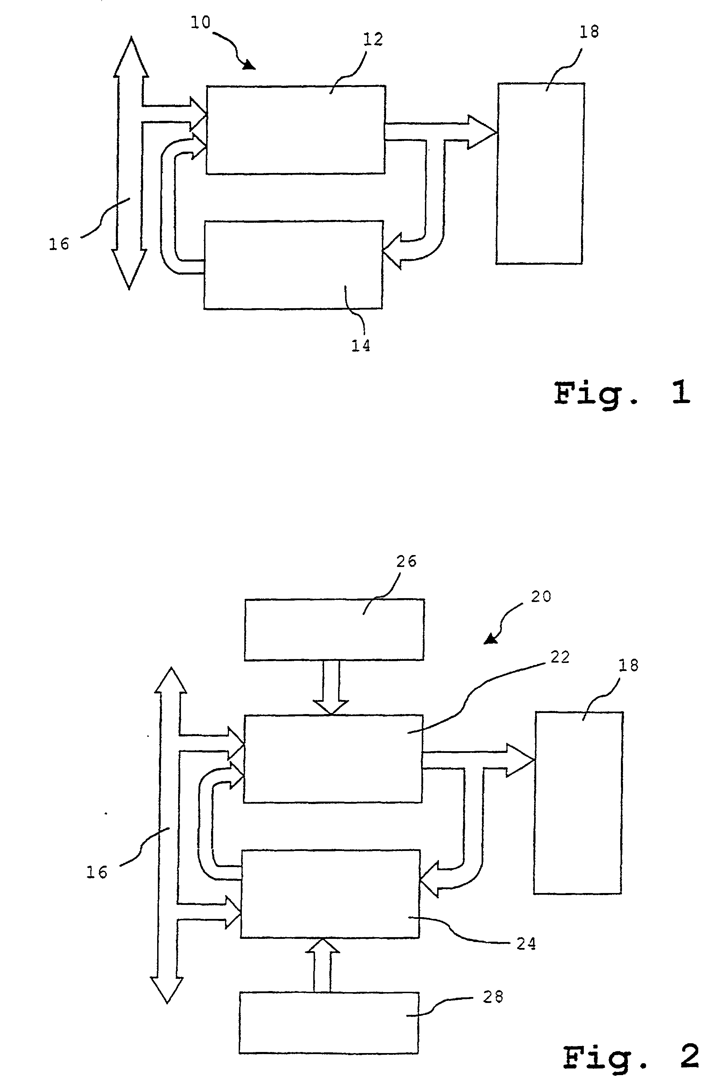

Fig. 1 zeigt eine schematische Ansicht einer bekannten Speichersteuerung 10. Die Speichersteuerung 10 hat eine Schalteinheit 12 und einen Zustandsspeicher 14. Die Schalteinheit 12 ist mit einem Bus 16 und mit einem Arbeitsspeicher 18 verbunden. Über den Bus 16 werden den in die Speicherzellen des Arbeitsspeichers 18 zu schreibenden Daten beigegebene Steuerbefehle an die Schalteinheit 12 übermittelt. Die Schalteinheit 12 erhält von dem Zustandsspeicher 14 Informationen über den vorhergehend an den Arbeitsspeicher 18 übermittelten Schaltbefehl. Abhängig von den Steuerbefehlen und dem vorhergehenden Schaltbefehl wählt die Schalteinheit 12 einen Schaltbefehl aus einem gespeicherten Befehlssatz aus und aktiviert diesen. Durch den Schaltbefehl wird die betreffende Speicherzelle des Arbeitsspeichers 18 in einen folgenden Zustand geschaltet.

Fig. 2 zeigt eine schematische Darstellung einer Speichersteuerung 20 als ein Ausführungsbeispiel der Erfindung. Die Speichersteuerung 20 hat eine Schalteinheit 22 und einen Zustandsspeicher 24. Über eine Eingabeeinheit 26 kann der Schalteinheit 22 der entsprechende Befehlssatz zum Zugreifen auf den Arbeitsspeicher 18 eingegeben werden. Zu diesem Zweck verfügt die Schalteinheit 22 über einen Schreib-/Lesespeicher (RAM), auf den im folgenden noch näher Bezug genommen wird. Die in diesem Schreib-/Lesespeicher gespeicherten Informationen bleiben dadurch auch beim Ausschalten des Gerätes mit der Speichersteuerung 20 erhalten, daß eine nicht dargestellte Batterie vorgesehen ist, die diesen Schreib-/Lesespeicher auf bekannte Weise mit Strom versorgt.

Eine weitere Eingabeeinheit 28 dient dazu, dem Zustandsspeicher 24 die benötigten Informationen über den Speichertyp des Arbeitsspeichers 18 zuzuführen. Der Zustandsspeicher 24 hat zu diesem Zweck ebenfalls einen auf bekannte Weise mit einer Batterie gepufferten Schreib-/Lesespeicher als Register, auf das im folgenden noch näher Bezug genommen wird. Die Eingabeeinheit 28 steht hier stellvertretend. Es ist eine Eingabe über eine Tastatur, eine Eingabe über den Bus 16 oder auch eine Eingabe von einem dem Arbeitsspeicher 18 zugeordneten Parameterspeicher möglich. Auf die Art der Eingabe mit den Eingabeeinheiten 26, 28 soll im folgenden nicht näher eingegangen werden.

Der Zustandsspeicher 24 speichert Informationen über den vorhergehend ausgeführten Schaltbefehl an den Arbeitsspeicher 18. Abhängig von den mit der Eingabeeinheit 28 eingegebenen Informationen über den Arbeitsspeicher 18 und von Steuerbefehlen, die dem Zustandsspeicher 24 über den Bus 16 eingegeben werden, überträgt der Zustandsspeicher 24 Ablaufsteuerbefehle an die Schalteinheit 22. Die Schalteinheit 22 wählt abhängig von den Ablaufsteuerbefehlen und von den Steuerbefehlen, die sie von dem Bus 16 erhält, einen Schaltbefehl aus einem ihr von der Eingabeeinheit 26 eingegebenen Befehlssatz aus und aktiviert diesen Schaltbefehl. Auf die entsprechende Speicherzelle des Arbeitsspeichers 18 wird dann durch diesen Schaltbefehl zugegriffen.

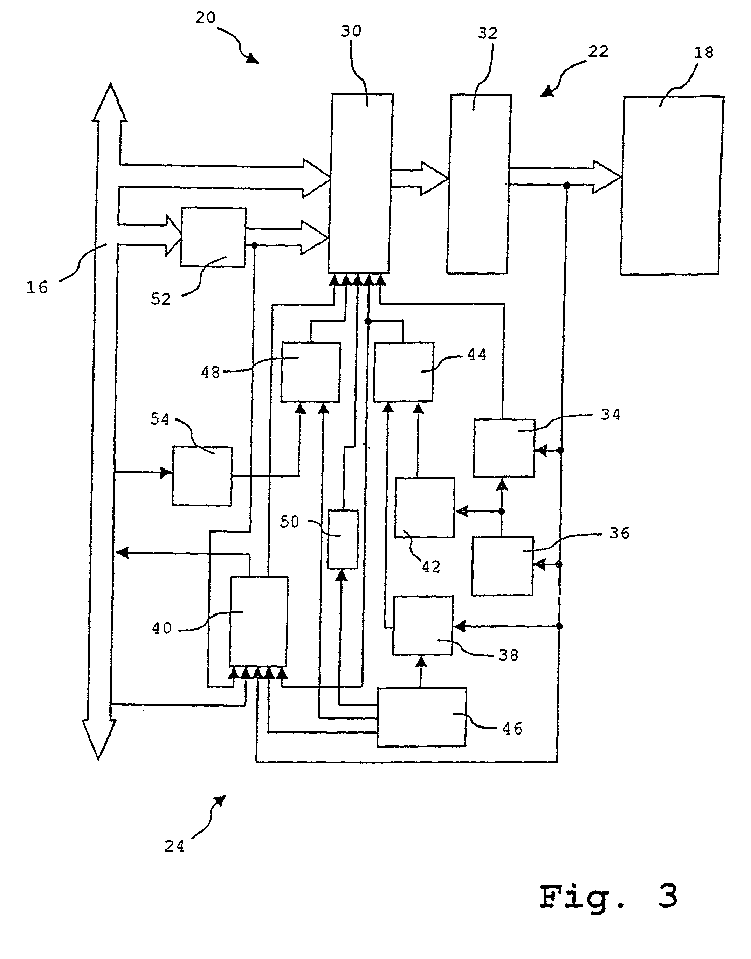

Fig. 3 zeigt schematisch eine Schaltungsanordnung der Speichersteuerung 20 nach Fig. 2. Gleiche Elemente haben die gleichen Bezugszeichen. Die Schalteinheit 22 hat einen Programmspeicher 30 und einen Ausgabespeicher 32. Nicht in Fig. 3 eingezeichnet ist ein Taktgenerator, der eine Impulsfolge erzeugt, nach der die einzelnen Elemente der Speichersteuerung 20 synchronisiert arbeiten.

Der Zustandsspeicher 24 hat einen Zwischenspeicher 34, ein Modul 36 zum Erkennen eines Schaltbefehls, ein Modul 38 zum Ermitteln der vorgegebenen Taktzahl für den aktuellen Schaltbefehl und ein Modul 40 zum Erzeugen eines binären Signals DATAVALID, die jeweils mit dem Ausgabespeicher 32 verbunden sind.

Das Modul 36 ist außerdem mit dem Zwischenspeicher 34 und mit einem Zähler 42 zum Zählen der Taktimpulse verbunden. Der Zähler 42 und das Modul 38 sind jeweils mit einem Eingang eines Komparators 44 verbunden, dessen Ausgang mit dem Programmspeicher 30 und dem Modul 40 jeweils verbunden ist.

Das Modul 38 ist mit einem Register 46 verbunden. Das Register 46 ist außerdem mit dem Modul 40, mit einem Komparator 48 und mit einem Zähler 50 verbunden. Der Zustandsspeicher 24 hat außerdem ein Modul 52 zum Erzeugen eines binären Signals NEUER ZUGRIFF und einen Zähler 54. Der Eingang des Moduls 52 ist mit dem Bus 16 verbunden. Der Ausgang des Moduls 52 ist mit dem Programmspeicher 30 und mit dem Modul 40 verbunden. Das Modul 40 ist außerdem auch direkt mit dem Bus verbunden. Der Eingang des Zählers 54 ist mit dem Bus 16 verbunden. Der Ausgang des Zählers 54 ist mit dem Komparator 48 verbunden.

Beim Einschalten des Stroms wird ein Einschaltsignal von dem Bus 16 an den Zähler 54 übertragen. Der Zähler 54 beginnt daraufhin, die Taktimpulse zu zählen. Das Modul 48 empfängt von dem Register 46 Informationen über den verwendeten Arbeitsspeicher 18 und die zur Initialisierung desselben durchzuführenden Schaltbefehle. Das Modul 48 empfängt außerdem von dem Register 46 die Anzahl der Taktimpulse, die für das Durchführen der Initialisierung benötigt wird. Solange der Zähler 54 den vom Register 46 vorgegebenen Wert nicht erreicht hat, gibt das Modul 48 die Informationen für die Initialisierung an den Programmspeicher 30 weiter. Der Programmspeicher 30 erzeugt entsprechend den ihm von dem Bus 16 übertragenen Steuerbefehlen und den ihm von dem Modul 48 übertragenen Informationen Aktivierbefehle, die er an den Ausgabespeicher 32 weiterleitet. Durch diese Aktivierbefehle werden die in dem Ausgabespeicher 32 gespeicherten Schaltbefehle für die Initialisierung aktiviert. Als Ausgabespeicher 32 eignet sich insbesondere ein sogenannter Flush-EEPROM. Bei dieser Art elektrisch löschbarer Festwertspeicher läßt sich der gesamte Speicherinhalt mit einem einzigen Löschimpuls von mehreren Sekunden Länge löschen. Sobald der Wert des Zählers 54 den vom Register 46 vorgegebenen Wert erreicht, erkennt das Modul 48, daß die Initialisierung somit beendet ist. Es gibt daraufhin keine weiteren Informationen von dem Register 46 an den Programmspeicher 30 weiter.

Das Register 46 gibt an den Zähler 50 einen Wert für die Anzahl der Taktimpulse entsprechend der Zeit weiter, nach der jeweils ein Wiederauffrischen des Speicherinhalts des Arbeitsspeichers 18 erfolgen soll. Der Zähler 50 gibt jedesmal, wenn er bis zu dem ihm von dem Register 46 übertragenen Wert gezählt hat, ein Signal zum Wiederauffrischen des Speicherinhalts des Arbeitsspeichers 18 an den Programmspeicher 30 weiter. Üblicherweise ist noch ein sogenannter Arbiter zwischen dem Zähler 50 und dem Programmspeicher 30 angeordnet. Der Arbiter soll Konflikte zwischen dem normalen Speicherzugriff und dem Wiederauffrischen verhindern. Zugunsten besserer Übersichtlichkeit ist in Fig. 3 auf die Darstellung des Arbiters verzichtet worden.

Wenn ein neuer Steuerbefehl von dem Bus 16 an die Speichersteuerung 20 übertragen wird, überprüft zunächst das Modul 52, ob dieser Steuerbefehl eine neue Befehlssequenz aktivieren soll. Das Ergebnis dieser Überprüfung wird als binäres Signal NEUER ZUGRIFF an den Programmspeicher 30 und an das Modul 40 übertragen.

In dem Zwischenspeicher 34 ist der letzte von dem Ausgabespeicher 32 aktivierte Schaltbefehl gespeichert. Wenn der Komparator 36 erkennt, daß durch diesen Schaltbefehl ein Schaltvorgang von dem Arbeitsspeicher 18 durchgeführt worden ist, veranlaßt es den Zwischenspeicher 34 zum Übertragen des gespeicherten Schaltbefehls an den Programmspeicher 30. Außerdem wird in diesem Fall der Zähler 42 gestartet, der die Taktimpulse zählt. Ein Modul 38 liest aus dem Register 46 einen Sollwert $Z_{soll}$ für die Anzahl der Taktimpulse, die für das Abarbeiten des Schaltbefehls benötigt werden. Der Komparator 44 vergleicht den aktuellen Stand des Zählers 42 mit dem von dem Modul 38 vorgegebenen Sollwert $Z_{soll}$. Sobald der Wert Z des Zählers 42 den Sollwert $Z_{soll}$ erreicht, wird ein binäres Signal FERTIG an den Programmspeicher 30 und an das Modul 40 übertragen. An Hand dieses binären Signals FERTIG erkennt der Programmspeicher 30, daß der vorhergehende Schaltbefehl abgearbeitet worden ist, wählt entsprechend dem nächsten, vom Bus 16 übertragenen Steuerbefehl einen Schaltbefehl aus dem Ausgabespeicher 32 aus und aktiviert diesen nächsten Schaltbefehl.

Einige Schaltbefehle können auch schon vor dem Übertragen des binären Signals FERTIG an den Programmspeicher 30 aktiviert werden. Dies wird von dem Programmspeicher erkannt, und der betreffende Schaltbefehl wird aktiviert, sobald der zugehörige Steuerbefehl an ihn übertragen wird.

Das Modul 40 empfängt von dem Ausgabespeicher 32 Informationen über den gerade ausgeführten Schaltbefehl. Von dem Komparator 44 empfängt das Modul 40 das binäre Signal FERTIG, und von dem Register 46 empfängt das Modul 40 Informationen über den im Arbeitsspeicher 18 verwendeten Speichertyp. Von dem Modul 52 empfängt das Modul 40 das binäre Signal NEUER ZUGRIFF und von dem Bus 16 ein binäres Signal $\overline{rd}$/wr, das Teil des Steuerbefehls ist. Das binäre Signal $\overline{rd}$/wr kennzeichnet, ob es sich um einen Schreib- oder um einen Lesezugriff handelt. An Hand dieser Informationen erzeugt das Modul 40, wie nachfolgend noch näher beschrieben, ein binäres Signal DATAVALID, das an den Bus 16 übertragen wird. Dieses binäre Signal DATAVALID kennzeichnet, ob der Schreib-/Lesezugriff beendet ist. Außerdem erzeugt das Modul 40 ein binäres Signal SELBE ZEILE, wenn die Befehlssequenz für den aktuellen Zugriff eine Speicherzelle derselben Zeile betrifft wie die Befehlssequenz des vorhergehenden Zugriffs. Dieses binäre Signal SELBE ZEILE wird als weiteres Ablaufsteuersignal ebenfalls an den Programmspeicher 30 übertragen.

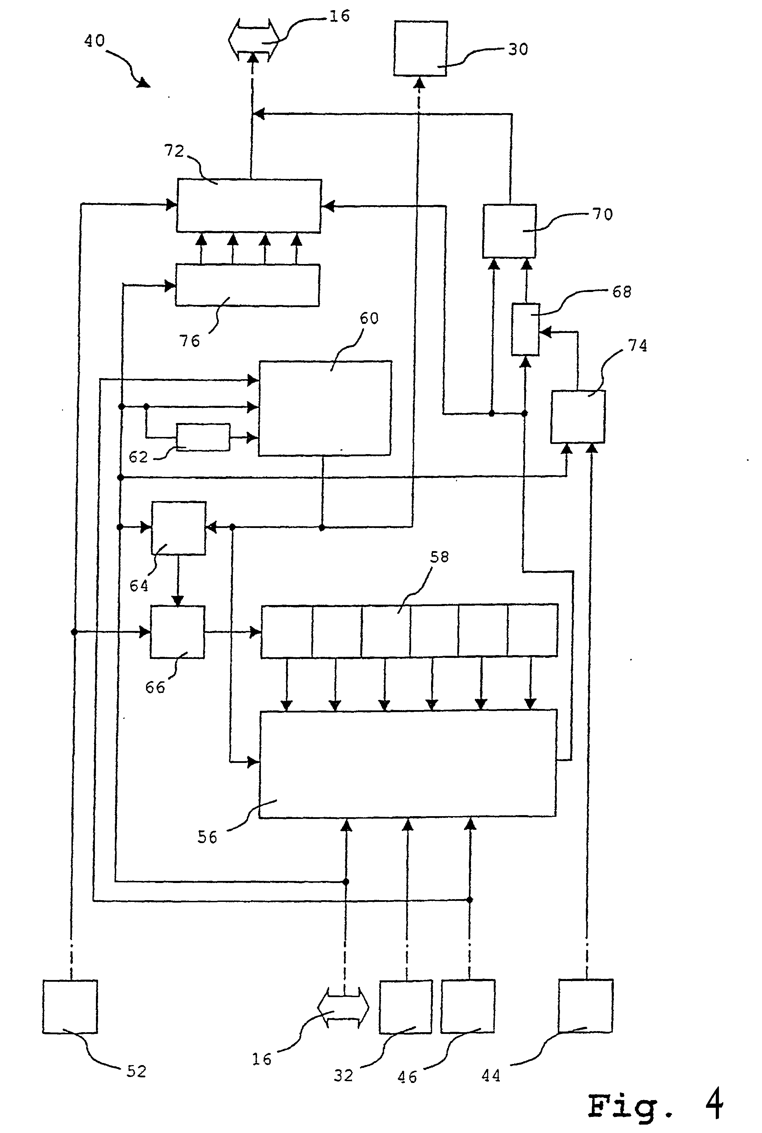

Fig. 4 zeigt schematisch die einzelnen Elemente des Moduls 40 von Fig. 3. Zur besseren Übersicht sind auch die Elemente eingezeichnet, mit denen das Modul 40 in Fig. 3 verbunden ist. Das Modul 40 hat ein Auswahlelement 56 und eine Speicherelementkette 58, wobei jedes Speicherelement der Speicherelementkette 58 mit dem Auswahlelement 56 jeweils verbunden ist. Außerdem ist das Auswahlelement 56 mit dem Register 46, dem Ausgabespeicher 32, dem Bus 16 und mit einem Modul 60 zum Erzeugen eines binären Signals verbunden, das die Möglichkeit eines parallelen Speicherzugriffs anzeigt.

Das Modul 60 ist einmal direkt und einmal unter Zwischenschalten eines Zwischenspeichers 62 mit dem Bus 16 verbunden. Außerdem ist das Modul 60 mit dem Register 46 verbunden. Der Ausgang des Moduls 60 ist mit einem Eingang eines UND-Gliedes 64 verbunden, dessen anderer Eingang mit dem Bus 16 in Verbindung steht. Der Ausgang des UND-Gliedes ist mit einem Eingang eines ODER-Gliedes 66 verbunden. Der andere Eingang des ODER-Gliedes 66 ist mit dem Modul 52 in Fig. 3 verbunden. Der Ausgang des ODER-Gliedes 66 ist mit dem ersten Speicherelement der Speicherelementkette 58 verbunden.

Der Ausgang des Auswahlelementes 56 ist mit einem Zwischenspeicher 68, mit einem ODER-Glied 70 und mit einem Schaltelement 72 verbunden. Der Zwischenspeicher 68 ist ebenfalls mit dem ODER-Glied 70 verbunden. Der Zwischenspeicher 68 hat zum Rücksetzen einen Steuereingang, der mit dem Ausgang eines ODER-Gliedes 74 verbunden ist. Ein Eingang des ODER-Gliedes 74 ist mit dem Bus 16, der andere Eingang mit dem Komparator 44 verbunden. Das Schaltelement 72 ist außerdem mit dem Modul 52 und mit einer FIFO-Speicherkette 76 verbunden, die wiederum mit dem Bus 16 in Verbindung steht.

Das Modul 60 empfängt von dem Bus 16 die Speicheradresse, für die der aktuelle Schaltbefehl gelten soll. Diese Adresse vergleicht das Modul 60 mit der Speicheradresse für den vorhergehenden Schaltbefehl, die in dem Zwischenspeicher 62 gespeichert ist. Diese beiden Speicheradressen werden von dem Modul 60 mit Informationen über den Arbeitsspeicher 18 verglichen, die das Register 46 an das Modul 60 überträgt. An Hand dieser in dem Register 46 gespeicherten Informationen überprüft das Modul 60, ob die aktuelle Speicheradresse und die vorhergehende Speicheradresse zur selben Zeile des Arbeitsspeichers 18 gehören, oder ob die aktuelle Speicheradresse zu einer anderen Speicherbank des Arbeitsspeichers 18 gehört als die vorhergehende Adresse. In diesen Fällen ist ein teilweises Überlappen der aktuellen Befehlssequenz und der vorhergehenden Befehlssequenz bei bestimmten Speichertypen möglich. Es wird dann von dem Modul 60 ein binäres Signal SELBE ZEILE erzeugt und an das UND-Glied 64 und an das Auswahlelement 56 übertragen. Außerdem wird das binäre Signal SELBE ZEILE an den Programmspeicher 30 übertragen.

Wenn das UND-Glied 64 gleichzeitig zu dem binären Signal SELBE ZEILE ein binäres Signal INTERRUPT von dem Bus 16 empfängt, bedeutet das, daß ein neuer Schreib-/Lesezugriff auf ein Speicherelement der gleichen Zeile vorgenommen werden soll, wie beim vorherigen Zugriff. In diesem Fall wird ein Binärwert 1 an das ODER-Glied 66 weitergegeben. Wenn entweder ein Binärwert 1 von dem UND-Glied 64 oder das binäre Signal NEUER ZUGRIFF von dem Modul 52 an das ODER-Glied 66 übertragen worden ist, gibt dieses ebenfalls einen Binärwert 1 an das erste Speicherelement der Speicherelementkette 58 weiter.

Bei jedem Takt der Taktimpulsfolge wird dieser Binärwert um ein Speicherelement in der Speicherelementkette 58 weitergeschoben. Die Speicherelementkette 58 hat in der Fig. 4 sechs schematisch dargestellte Speicherelemente. Selbstverständlich kann die Speicherelementkette 58 aber auch eine andere Anzahl von Speicherelementen haben. Das Auswahlelement 56 erhält von dem Register 46 einen Wert $DVZ_{soll}$, der für den jeweiligen Schaltbefehl die notwendige Anzahl von Taktimpulsen angibt. Von dem Ausgabespeicher 32 empfängt das Auswahlelement 56 ein binäres Signal WE, das kennzeichnet, ob entsprechend dem vorhergehenden Schaltbefehl gerade in eine Speicherzelle geschrieben wird. Außerdem empfängt das Auswahlelement 56 von dem Bus 16 ein binäres Signal $\overline{rd}$/wr, das kennzeichnet, ob bei dem nächsten Schaltbefehl in eine Speicherzelle geschrieben oder aus dieser gelesen werden soll.

Entsprechend dem für die Kombination SELBE ZEILE, $\overline{rd}$/wr, WE in dem Register 46 ausgegebenen Wert $DVZ_{soll}$ für den verwendeten Arbeitsspeicher 18 gibt das Auswahlelement 56 den Binärwert 1 aus dem entsprechenden Speicherelement der Speicherelementkette 58 nach Ablauf der vorgegebenen Anzahl $DVZ_{soll}$ Taktimpulse an den Zwischenspeicher 68, das ODER-Glied 70 und das Schaltelement 72 weiter. Sobald dieses binäre Signal von dem Auswahlelement 56 an das ODER-Glied 70 übertragen worden ist, gibt dieses das binäre Signal DATAVALID an den Programmspeicher 30 in Fig. 3 weiter.

Wenn das ODER-Glied 74 von dem Komparator 44 das Signal FERTIG oder von dem Bus 16 das Signal INTERRUPT empfängt, bewirkt es ein Zurücksetzen des in dem Zwischenspeicher 68 gespeicherten Werts auf 0.

In der FIFO-Speicherelementkette 76 können mehrere von dem Bus 16 übertragene Herkunftsadressen für durchzuführende Speicherzugriffe gespeichert werden. Beim Eintreffen des Signals NEUER ZUGRIFF von dem Modul 50 veranlaßt das Schaltelement 72 das Speichern der aktuell übertragenen Herkunftsadresse in die FIFO-Speicherelementkette 76. In der Reihenfolge des Speicherns gibt das Schaltelement 72 die jeweils zuerst gespeicherte Speicherquellenanforderung bei Eintreffen des binären Signals DATAVALID von dem Auswahlelement 56 an den Bus 16 zurück.

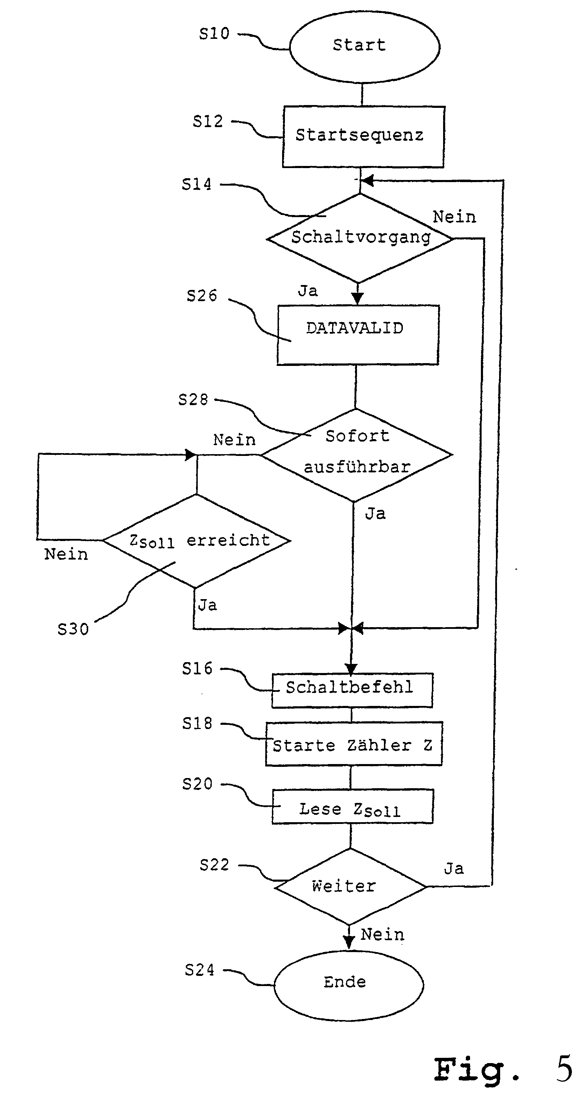

Fig. 5 zeigt ein Blockdiagramm eines Ablaufs zum Aktivieren von Schaltbefehlen für den Zugriff auf Speicherzellen zum Schreiben und Lesen von Daten, der von der Speichersteuerung 20 nach Fig. 2 ausgeführt wird. Im Schritt S10 wird der Ablauf begonnen. Es folgt der Schritt S12, in dem eine Startsequenz für den jeweiligen Speichertyp ausgeführt wird. Damit der Speicher nach dem Einschalten des Stroms in einen definierten Anfangszustand gebracht werden kann, müssen hier eine Reihe von spezifischen Schaltbefehlen ausgeführt werden. Die Art und die Reihenfolge dieser Schaltbefehle der Startsequenz werden dem Programmspeicher 30 bei dem vorstehend beschriebenen Ausführungsbeispiel von dem Register 46 übermittelt.

In Schritt S14 wird als nächstes überprüft, ob vorhergehend ein Schaltvorgang durchgeführt worden ist. Ist das nicht der Fall, folgt als nächstes Schritt S16. In Schritt S16 wird entsprechend den Steuerbefehlen ein Schaltbefehl aus dem gespeicherten Befehlssatz ausgewählt und aktiviert. Anschließend wird in Schritt S18 ein Zähler Z gestartet. Danach wird in Schritt S20 ein Sollwert für den gerade aktivierten Schaltbefehl aus dem Register 46 gelesen.

Anschließend wird in Schritt S22 überprüft, ob ein weiterer Steuerbefehl zu bearbeiten ist. Ist das der Fall, wird zurück zu Schritt S14 verzweigt. Andernfalls wird in Schritt S24 das Verfahren beendet.

Wenn in Schritt S14 erkannt wird, daß vorhergehend ein Schaltvorgang durchgeführt worden ist, folgt Schritt S26. In Schritt S26 sind eine Reihe von Verfahrensschritten zusammengefaßt, auf die nachfolgend noch näher Bezug genommen wird.

Es folgt Schritt S28, in dem überprüft wird, ob der gewünschte Schaltvorgang sofort ausgeführt werden kann. Ist dies der Fall, folgt als nächstes das Aktivieren des aktuellen Schaltbefehls in Schritt S16.

Andernfalls wird in Schritt S30 der aktuelle Zählerstand des Zählers Z mit dem Sollwert $Z_{soll}$ verglichen. Solange der Zähler Z nicht den Stand $Z_{soll}$ erreicht hat, wird der Vergleich in einer Schleife erneut durchgeführt. Sobald der Zähler Z den Sollwert $Z_{soll}$ erreicht hat, folgt als nächstes das Aktivieren des aktuellen Schaltbefehls in Schritt S16.

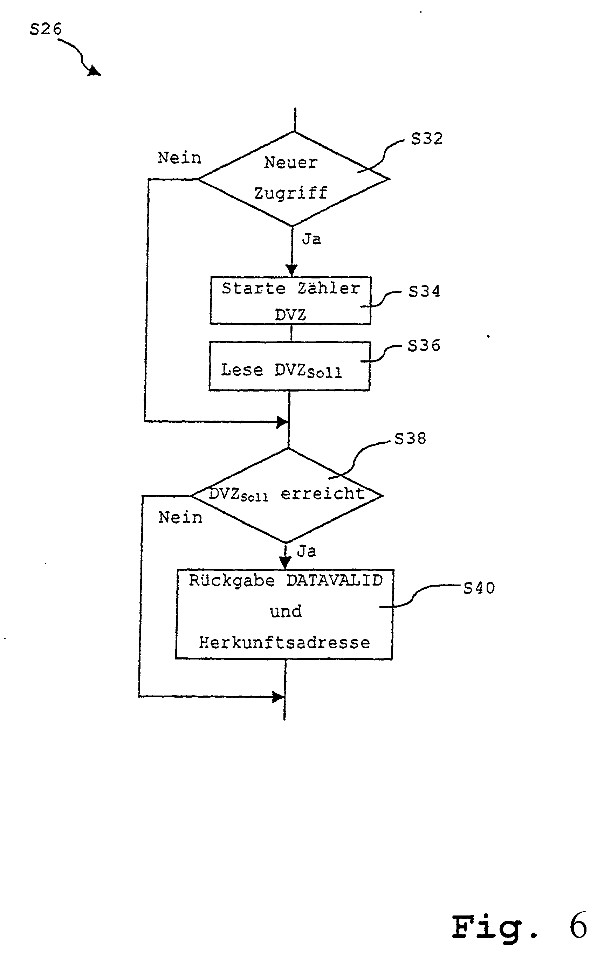

Fig. 6 zeigt die in Schritt S26 in Fig. 5 zusammengefaßten Verfahrensschritte zum Erzeugen des Signals DATAVALID. Zunächst wird in Schritt S32 überprüft, ob die aktuellen Steuerbefehle zu einer neuen Befehlssequenz, d.h. zu einem neuen Zugriff gehören. Ist das der Fall, wird als nächstes in Schritt S34 ein Zähler DVZ gestartet. Es folgt Schritt S36. In Schritt S36 wird aus dem Register 46 ein Sollwert $DVZ_{soll}$ ausgelesen.

Als nächstes wird in Schritt S38 überprüft, ob der Zähler DVZ den Sollwert $DVZ_{soll}$ erreicht hat. Ist das nicht der Fall, folgt als nächstes Schritt S28 in Fig. 5. Wenn in Schritt S38 erkannt wird, daß der Zähler DVZ den Sollwert $DVZ_{soll}$ erreicht hat, folgt als nächstes Schritt S40. Hier wird dann ein Signal DATAVALID erzeugt und zusammen mit der Herkunftsadresse zurückgegeben. Auf diese Weise wird mitgeteilt, daß der Speicherzugriff des betreffenden Prozessors jetzt durchgeführt worden ist.

**Patentansprüche**

1.  Speichersteuerung zum Durchführen von Schaltbefehlen für den Zugriff auf Speicherzellen zum Schreiben und zum Lesen von Daten, die

    den Daten beigegebene Steuerbefehle erhält, für mindestens einen Speichertyp einen Befehlssatz mit Befehlssequenzen aus einzelnen, in einer vorbestimmten Reihenfolge abzuarbeitenden Schaltbefehlen enthält, die durch die Steuerbefehle aktiviert werden,
die Schaltbefehle einer dem aktuellen Steuerbefehl entsprechenden Befehlssequenz aufeinanderfolgend aktiviert, und
den aktuellen Schaltbefehl um eine vorbestimmte Zeit später als den vorhergehenden Schaltbefehl aktiviert,

**dadurch gekennzeichnet, daß**

abhängig von dem vorhergehenden Schaltbefehl und dem aktuellen Steuerbefehl der aktuelle Schaltbefehl aktiviert wird, und
daß der Speichersteuerung den Speicherzellen zugeordnete Informationen zuführbar sind, die die genannte vorbestimmte Zeit angeben.

2.  Speichersteuerung nach Anspruch 1, **dadurch gekennzeichnet, daß** für jeden Schaltbefehl ein Sollwert ($Z_{soll}$) in einem ersten Register (46) gespeichert ist.

3.  Speichersteuerung nach Anspruch 2, **dadurch gekennzeichnet, daß** ein Zähler (42) die Impulse einer Impulsfolge seit dem Aktivieren des Schaltbefehls zählt.

4.  Speichersteuerung nach Anspruch 3, **dadurch gekennzeichnet, daß** der Zählerstand (Z) mit dem Sollwert ($Z_{soll}$) verglichen wird, und daß ein erstes Signal (FERTIG) erzeugt wird, wenn der Zählerstand (Z) gleich dem Sollwert ($Z_{soll}$) ist.

5.  Speichersteuerung nach Anspruch 4, **dadurch gekennzeichnet, daß** das erste Signal (FERTIG) erfaßt wird, und daß beim Erfassen des ersten Signals (FERTIG) der nächste Schaltbefehl aktiviert wird.

6.  Speichersteuerung nach Anspruch 5, **gekennzeichnet durch** mindestens einen Schaltbefehl, der bereits vor dem Erfassen des ersten Signals (FERTIG) aktiviert wird.

7.  Speichersteuerung nach einem der Ansprüche 2 bis 6, **dadurch gekennzeichnet, daß** die Sollwerte ($Z_{soll}$) für die Schaltbefehle in einem Einrichtvorgang in das erste Register (46) geschrieben werden.

8.  Speichersteuerung nach einem der vorhergehenden Ansprüche, **dadurch gekennzeichnet, daß** das erste Register (46) auch einen Wert für die Zeit enthält, nach der der Speicherinhalt aufgefrischt werden soll.

**9.** Speichersteuerung nach einem der vorhergehenden Ansprüche, **gekennzeichnet durch** eine Einrichtung (52), die ein zweites Signal (NEUER ZUGRIFF) erzeugt, wenn der aktuelle Steuerbefehl zu einer neuen Befehlssequenz gehört.

**10.** Speichersteuerung nach einem der vorhergehenden Ansprüche, **dadurch gekennzeichnet, daß** von der Speichersteuerung Ablaufsteuerbefehle für das Abarbeiten der einzelnen Schaltbefehle einer Befehlssequenz in der vorbestimmten Reihenfolge erzeugt werden.

**11.** Speichersteuerung nach einem der vorhergehenden Ansprüche, **dadurch gekennzeichnet, daß** die Aktivierbefehle in einem zweiten Register (30) gespeichert sind.

**12.** Speichersteuerung nach einem der vorhergehenden Ansprüche, **dadurch gekennzeichnet, daß** die Schaltbefehle in einem dritten Register (32) gespeichert sind.

**13.** Speichersteuerung nach Anspruch 12, **dadurch gekennzeichnet, daß** das dritte Register (32) ein Schreib/Lesespeicher oder ein programmierbarer Festwertspeicher ist, in den die Schaltbefehle in einem Initialisiervorgang geschrieben werden.

**14.** Speichersteuerung nach einem der vorhergehenden Ansprüche, **dadurch gekennzeichnet, daß** ein drittes Signal (SELBE ZEILE) erzeugt wird, wenn die aktuelle Befehlssequenz Speicherzellen derselben Zeile des Speichers (18) betrifft wie die vorhergehende Befehlssequenz.

**15.** Speichersteuerung nach einem der vorhergehenden Ansprüche, **dadurch gekennzeichnet, daß** der Befehlssatz für den jeweiligen Speichertyp an Hand der den Speicherzellen zugeordneten Informationen bestimmt wird.

**16.** Speichersteuerung nach einem der vorhergehenden Ansprüche, **dadurch gekennzeichnet, daß** ein viertes Signal (DATAVALID) erzeugt wird, wenn das Schreiben oder Lesen beendet ist.

**17.** Speichersteuerung nach Anspruch 16, **dadurch gekennzeichnet, daß** das vierte Signal (DATAVALID) zusammen mit der Herkunftsadresse für den Zugriff nach dem Beenden zurückgegeben wird.

**18.** Speichersteuerung nach Anspruch 16 oder 17, **dadurch gekennzeichnet, daß** ein fünftes Signal erzeugt wird, wenn der aktuelle Schaltbefehl der erste Schaltbefehl einer neuen Befehlssequenz ist.

**19.** Speichersteuerung nach Anspruch 18, **dadurch**

**gekennzeichnet, daß** die den Speicherzellen zugeordneten Informationen auch die Zeit angeben, nach der nach dem Aktivieren des ersten Schaltbefehls der jeweiligen neuen Befehlssequenz das Schreiben oder das Lesen jeweils beendet ist.

**Claims**

**1.** A memory controller for executing switching commands to access storage cells for data reading and writing, said memory controller
receiving control commands assigned to the data, containing for at least one type of memory a set of commands with command sequences consisting of individual switching commands to be executed in a predetermined order, said switching commands being activated by said control commands,
successively activating the switching commands of a command sequence corresponding to the current control command, and
activating the current switching command a predetermined time later than the preceding switching command,
**characterized in that**
the current switching command is activated in dependence on the preceding switching command and on the current control command, and
that the memory controller can be supplied with information assigned to the storage cells, said information indicating said predetermined time.

**2.** A memory controller according to claim 1, **characterized in that**, for each switching command, a desired value ($Z_{desired}$) is stored in a first register (46).

**3.** A memory controller according to claim 2, **characterized in that** a counter (42) counts the pulses of a pulse sequence since the switching command has been activated.

**4.** A memory controller according to claim 3, **characterized in that** the counter value (Z) is compared with the desired value ($Z_{desired}$), and that a first signal (READY) is generated if the counter value (Z) is equal to the desired value ($Z_{desired}$).

**5.** A memory controller according to claim 4, **characterized in that** the first signal (READY) is detected, and that the subsequent switching command is activated upon detection of the first signal (READY).

**6.** A memory controller according to claim 5, **characterized by** at least one switching command which is activated already before detection of the first signal (READY).

**7.** A memory controller according to any one of claims 2 to 6, **characterized in that** the desired vlaues ($Z_{desired}$) for the switching commands are written to the first register (46) during a setting process.

8. A memory controller according to any one of the preceding claims, **characterized in that** the first register (46) also contains a value for the time after which the memory contents are to be refreshed.

9. A memory controller according to any one of the preceding claims, **characterized by** a device (52) which generates a second signal (NEW ACCESS) if the current control command belongs to a new command sequence.

10. A memory controller according to any one of the preceding claims, **characterized in that** execution control commands are generated by said memory controller, for executing the individual switching commands of a command sequence in the predetermined order.

11. A memory controller according to any one of the preceding claims, **characterized in that** the activation commands are stored in a second register (30).

12. A memory controller accoding to any one of the preceding claims, **characterized in that** the switching commands are stored in a third register (32).

13. A memory controller according to claim 12, **characterized in that** the third register (32) is a read/write memory or a programmable read-only memory, the switching commands being written thereto during an intialization process.

14. A memory controller according to any one of the preceding claims, **characterized in that** a third signal (SAME LINE) is generated if the current command sequence relates to storage cells of the same line of the memory (18) as the preceding command sequence.

15. A memory controller according to any one of the preceding claims, **characterized in that** the set of commands for the respective type of memory is determined based on the information assigned to the storage cells.

16. A memory controller according to any one of the preceding claims, **characterized in that** a fourth signal (DATAVALID) is generated when reading or writing is completed.

17. A memory controller according to claim 16, **characterized in that** after completion, the fourth signal (DATAVALID) is returned together with the origin address for access.

18. A memory controller according to claim 16 or 17, **characterized in that** a fifth signal is generated if the current switching command is the first switching command of a new command sequence.

19. , A memory controller according to claim 18, **characterized in that** the information assigned to the storage cells also contain the time after which reading or writing is completed, respectively, following activation of the first switching command of the corresponding new command sequence.

**Revendications**

1. Contrôleur de mémoire pour exécuter des instructions de commutation d'accès à des cellules de mémoire en vue d'écrire et de lire des données, lequel reçoit des instructions de commande jointes aux données, contient pour au moins un type de mémoire un ensemble d'instructions présentant des séquences d'instructions constituées d'instructions de commutation à traiter dans un ordre prédéterminé qui sont activées par les instructions de commande, active successivement les instructions de commutation d'une séquence d'instructions correspondant à l'instruction de commande en cours, et active l'instruction de commutation en cours pendant un temps prédéterminé postérieur à l'instruction de commutation précédente,
   **caractérisé en ce que**
   l'instruction de commutation en cours est activée en fonction de l'instruction de commutation précédente et de l'instruction de commande en cours, et **en ce que** des informations associées aux cellules de mémoire, indiquant ledit temps prédéterminé, sont amenées à la commande de mémoire.

2. Contrôleur de mémoire selon la revendication 1, **caractérisé en ce qu'**une valeur de consigne ($Z_{cons}$) est mémorisée dans un premier registre (46) pour chaque instruction de commutation.

3. Contrôleur de mémoire selon la revendication 2, **caractérisé en ce qu'**un compteur (42) compte les impulsions d'un train d'impulsions depuis l'activation de l'instruction de commutation.

4. Contrôleur de mémoire selon la revendication 3, **caractérisé en ce que** l'état ($Z$) du compteur est comparé à la valeur de consigne ($Z_{cons}$), et **en ce qu'**un premier signal (PRÊT) est généré lorsque l'état ($Z$) du compteur est égal à la valeur de consigne ($Z_{cons}$).

5. Contrôleur de mémoire selon la revendication 4, **caractérisé en ce que** le premier signal (PRÊT) est détecté, et **en ce que** l'instruction de commutation suivante est activée lors de la détection du premier signal (PRÊT).

6. Contrôleur de mémoire selon la revendication 5, **caractérisé par** au moins une instruction de commutation qui est activée déjà avant la détection du premier signal (PRÊT).

7. Contrôleur de mémoire selon l'une des revendications 2 à 6, **caractérisé en ce que** les valeurs de consigne ($Z_{cons}$) relatives aux instructions de commutation sont écrites dans le premier registre (46) dans un processus de réglage.

8. Contrôleur de mémoire selon l'une des revendications précédentes, **caractérisé en ce que** le premier registre (46) contient également une valeur relative au temps au bout duquel le contenu de la mémoire doit être rafraîchi.

9. Contrôleur de mémoire selon l'une des revendications précédentes, **caractérisé par** un dispositif (52) qui génère un deuxième signal (NOUVEL ACCES) lorsque l'instruction de commande en cours appartient à une nouvelle séquence d'instructions.

10. Contrôleur de mémoire selon l'une des. revendications précédentes, **caractérisé en ce que** des instructions de commande de processus relatives au traitement des instructions de commutation individuelles d'une séquence d'instructions dans l'ordre prédéterminé sont générées par la commande de memoire.

11. Contrôleur de mémoire selon l'une des revendications précédentes, **caractérisé en ce que** les instructions d'activation sont mémorisées dans un deuxième registre (30) .

12. Contrôleur de mémoire selon l'une des revendications précédentes, **caractérisé en ce que** les instructions de commutation sont mémorisées dans un troisième registre (32).

13. Contrôleur de mémoire selon la revendication 12, **caractérisé en ce que** le troisième registre (32) est une mémoire de lecture/écriture ou une mémoire à lecture seule programmable, dans laquelle les instructions de commutation sont écrites dans un processus d'initialisation.

14. Contrôleur de mémoire selon l'une des revendications précédentes, **caractérisé en ce qu'**un troisième signal (MEME LIGNE) est généré lorsque la séquence d'instructions en cours concerne des cellules de mémoire de la même ligne de la mémoire (18) que la séquence d'instructions précédente.

15. Contrôleur de mémoire selon l'une des revendications précédentes, **caractérisé en ce que** l'ensemble d'instructions relatives au type de mémoire correspondant est déterminé grâce aux informations associées aux cellules de mémoire.

16. Contrôleur de mémoire selon l'une des revendications précédentes, **caractérisé en ce qu'**un quatrième signal (DONNEE VALIDE) est généré lorsque l'écriture ou la lecture est terminée.

17. Contrôleur de mémoire selon la revendication 16, **caractérisé en ce que** le quatrième signal (DONNEE VALIDE) est renvoyé conjointement avec l'adresse de provenance relative à l'accès après la fin.

18. Contrôleur de mémoire selon la revendication 16 ou 17, **caractérisé en ce qu'**un cinquième signal est généré lorsque l'instruction de commutation en cours est la première instruction de commutation d'une nouvelle séquence d'instructions.

19. Contrôleur de mémoire selon la revendication 18, **caractérisé en ce que** les informations associées aux cellules de mémoire indiquent également le temps au bout duquel l'écriture ou la lecture est à chaque fois terminée après l'activation de la première instruction de commutation de la nouvelle séquence d'instructions correspondante.

Fig. 1

Fig. 2

Fig. 3

Fig. 4

S10 — Start

S12 — Startsequenz

S14 — Schaltvorgang — Nein

Ja

S26 — DATAVALID

S28 — Sofort ausführbar — Nein

Ja

Z_soll erreicht — Nein

Ja

S30

S16 — Schaltbefehl

S18 — Starte Zähler Z

S20 — Lese Z_soll

S22 — Weiter — Ja

Nein

S24 — Ende

Fig. 5

14

S26

```
              ┌──────────────┐
              │    Neuer     │─── S32
         Nein │   Zugriff    │
     ┌────────┤              │
     │        └──────┬───────┘
     │               │ Ja
     │        ┌───────▼───────┐
     │        │ Starte Zähler │─── S34
     │        │      DVZ      │
     │        └───────┬───────┘
     │        ┌───────▼───────┐
     │        │  Lese DVZ_Soll │─── S36
     │        └───────┬───────┘
     │               │
     └───────────────►
                     │
              ┌──────▼───────┐
              │ DVZ_Soll     │─── S38
         Nein │ erreicht     │
     ┌────────┤              │
     │        └──────┬───────┘
     │               │ Ja
     │     ┌─────────▼─────────┐
     │     │ Rückgabe DATAVALID │─── S40
     │     │        und         │
     │     │  Herkunftsadresse  │
     │     └─────────┬──────────┘
     │               │
     └───────────────►
                     │
                     ▼
```

Starte Zähler DVZ

Lese $DVZ_{Soll}$

$DVZ_{Soll}$ erreicht

Rückgabe DATAVALID und Herkunftsadresse

# Fig. 6